# EUROPEAN PATENT SPECIFICATION

(11) **EP 3 255 704 B1**
(45) Date of publication and mention of the grant of the patent: **26.08.2020**
(21) Application number: 17000953.4
(22) Date of filing: 06.06.2017
(51) Int. Cl.: H01M 2/12, H01M 2/34

(54) **POWER BATTERY TOP COVER AND POWER BATTERY**
HOCHLEISTUNGSBATTERIEDECKEL UND HOCHLEISTUNGSBATTERIE
COUVERCLE SUPÉRIEUR DE BATTERIE ÉLECTRIQUE ET BATTERIE ÉLECTRIQUE

(30) Priority: 07.06.2016 CN 201610399363
(43) Date of publication of application: 13.12.2017
(73) Proprietor: Contemporary Amperex Technology Co., Limited, Jiaocheng District Ningde City Fujian 352100 (CN)
(72) Inventor: LI, Quankun, Ningde City, 352100 (CN); GUO, Jian, Ningde City, 352100 (CN); Wang, Peng, Ningde City, 352100 (CN); Deng, Pinghua, Ningde City, 352100 (CN); ZHU, Lingbo, Ningde City, 352100 (CN)
(74) Representative: FARAGO Patentanwälte

(56) References cited:
- EP-A2- 1 076 350
- US-A1- 2013 196 186
- US-A1- 2015 147 600
- US-A1- 2015 229 006

## Description

### TECHNICAL FIELD

The present application relates to the field of energy storage devices and, particularly, relates to a top cover of a power battery and a power battery.

### BACKGROUND

In order to solve the overcharging problem of EV batteries, the generally adopted solution in the art is to cut off a main circuit of the battery before the battery exploded or catch fire, so as to prevent the battery from being charged continuously and guarantee safety of the battery.

At present, as for the square shell battery, a current interrupt device (Current Interrupt Device, CID) is generally adopted, i.e., a deformable plate and a conductive plate having integrated a CID are provided in the main circuit of the positive electrode. The conductive plate is coupled to the electrode tab of the bare cell and the deformable plate, and the deformable plate is welded with the positive terminal or the top cover plate. When the battery is overcharged, the deformable plate is inversely deformed due to excessive internal pressure, so as to disconnect the deformable plate from the conductive plate.

As there are increasing demands on the energy density of the power battery, demands on utilization rate of the internal space of the battery are increasing accordingly.

In view of the above, it is necessary to provide a structure which occupies as little internal space of the battery as possible.

### SUMMARY

The present application provides a power batter top cover and a power battery, so as to solve the above problem.

A first aspect of the present application provides a top cover for a power battery, including a top cover plate, a first electrode unit and a second electrode unit,
wherein the first electrode unit includes a connecting plate, a deformable plate, an insulating piece and a current interrupt plate,
an assembling hole is formed in the top cover plate, the current interrupt plate is in direct contact with the top cover plate,
the connecting plate is insulated from the top cover plate through the insulating piece and is formed with an accommodating chamber, the accommodating chamber faces to the assembling hole,
the deformable plate is attached to the connecting plate and covers the accommodating chamber, and the deformable plate is electrically connected with the current interrupt plate,
the second electrode unit is electrically insulated from the top cover plate, and the deformable plate is configured to uncouple from the current interrupt plate when an internal pressure of the power battery goes beyond a reference pressure.

Preferably, the current interrupt plate seals the assembling hole; or
the current interrupt plate and the deformable plate seal the assembling hole.

Preferably, the deformable plate is in direct contact with a bottom edge of the accommodating chamber.

Preferably, a portion of the accommodating chamber away from the assembling hole is closed, and the deformable plate seals the accommodating chamber.

Preferably, a portion of the accommodating chamber away from the assembling hole is formed with an opening.

Preferably, a groove is formed at a bottom edge of the accommodating chamber, and an edge of the deformable plate is inserted into the groove.

Preferably, the deformable plate includes a connecting head, a deformable portion and an annular connecting portion,
the deformable portion is shaped into a circular sheet, the connecting head protrudes from a bottom surface of the deformable portion, the annular connecting portion surrounds an outer edge of the deformable portion,
the connecting head is connected to the current interrupt plate, and the annular connecting portion is inserted into the groove.

Preferably, the deformable plate and the connecting plate are integrated as a whole.

Preferably, the opening is covered by a protection member.

Preferably, the current interrupt plate and the top cover plate are integrated as a whole.

Preferably, the insulating piece is riveted with the top cover plate.

A second aspect of the present application provides a power battery including the power battery top cover.

The technical solutions provided by the present application can achieve the following beneficial effects:

In the power battery provided by the present application, the current interrupt plate is arranged on the top cover plate and the deformable plate is arranged on the connecting plate, so that the internal space of the battery occupied by the protection structure (e.g., the current interrupt plate and the deformable plate) is significantly reduced.

It should be understood that, the general description above and the detailed description below are merely exemplary, which shall not limit the present application.

### BRIEF DESCRIPTION OF DRAWINGS

FIG. 1 is an overall sectional side view of a power battery top cover according to an embodiment of the present application;
FIG. 2 is a partial enlarged view of part A shown in FIG. 1 of a power battery top cover in which an accommodating chamber is a closed structure and a deformable plate is a separate structure, according to an embodiment of the present application;
FIG. 3 is a partial enlarged view of part A shown in FIG. 1 of a power battery top cover in which an accommodating chamber is an open structure and a deformable plate is integrated with a connecting plate, according to an embodiment of the present application;
FIG. 4 is a structural schematic diagram of the structure shown in FIG. 3 after the accommodating chamber is covered by a protection member; and
FIG. 5 is a partial enlarged view of part A shown in FIG. 1 of a power battery top cover in which a deformable plate is connected with an insulating piece by riveting, according to an embodiment of the present application.

### Reference signs:

10-top cover plate;
100-assembling hole;
102-riveting piece;
20-first electrode unit;
200-insulating piece
201-current interrupt plate;
202-deformable plate;
202a-connecting head;
202b-deformable portion;
202c-annular connecting portion
203-connecting plate;
204-accommodating chamber;
205-protection member;
206-groove;
30-second electrode unit.

The drawings herein are incorporated into the description and constitute a part of the description, which show the embodiments of the present application and are used to explain principles of the present application together with the description.

### DESCRIPTION OF EMBODIMENTS

The present application is described in further details as follows with reference to embodiments and drawings. The expressions "front", "rear", "left", "right", "top" and "bottom" all refer to the placement states of the power battery top cover and the power battery in the drawings.

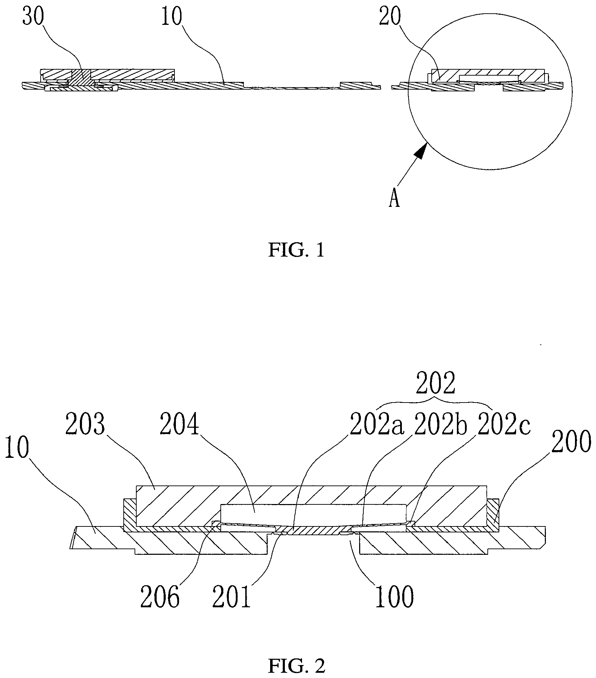

The present application provides a power battery, and the power battery includes a power battery top cover and a cell, etc. As shown in FIGS. 1-4, the power battery top cover includes a top cover plate 10, a first electrode unit 20 and a second electrode unit 30. The second electrode unit 30 is electrically insulated from the top cover plate 10. The first electrode unit 20 includes an insulating piece 200, a current interrupt plate 201, a deformable plate 202 and a connecting plate 203. In an embodiment, an assembling hole 100 is formed in the top cover plate 10, the current interrupt plate 201 is arranged on the top cover plate 10 and is electrically connected with the top cover plate 10, i.e., the current interrupt plate 201 is in direct contact with the top cover plate 10. Preferably, the current interrupt plate 201 is arranged in the assembling hole 100.

As the current interrupt plate 201 is arranged in the assembling hole 100 of the top cover plate 10, the current interrupt plate 201 will not occupy the internal space of the power battery. The cell has two electrodes, and the two electrodes are connected with the top cover plate 10 and the second electrode unit 30, respectively.

In order to guarantee normal working of the protection structure (e.g., the current interrupt plate 201 and the deformable plate 202), in the present embodiment, the connecting plate 203 is insulated from the top cover plate 10 through the insulating piece 200.

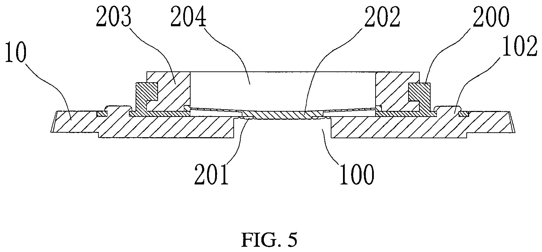

In the present embodiment, the insulating piece 200 can be fixed with the riveting piece 102 by various manners, for example, adhering, clamping, riveting, etc. The adhering manner refers to that an adhesive is used to adhere a surface of the insulating piece 200 with a surface of the riveting piece 102, however, such fixing manner may be not secure. The clamping manner needs to provide corresponding clamping pieces on the insulating piece 200 and the top cover plate 10, the structure of which is complicated. As compared with the above two connecting manners, the riveting manner is simpler and more secure. As shown in FIG. 5, a riveting piece 102 can be provided on an upper surface of the top cover plate 10, and a riveting hole (not numbered in the figures) is defined in a position of the insulating piece 200 corresponding to the riveting piece 102; during assembling, the riveting piece 102 passes through the riveting hole and is tightly riveted therein, so as to complete the fixing.

In some embodiments of the present embodiment, in order to improve the connecting strength between the connecting plate 203 and the insulating piece 200, a clamping structure, e.g., clamping slot, clamping block, clamping hole, or buckle, etc., may be provided on the connecting plate 203 and the insulating piece 200, so that the connecting plate 203 can be connected with the insulating piece 200 by a clamping manner with higher connecting strength.

Air leakage influences the normal breaking of the current interrupt plate 201. In order to prevent from air leakage, in the present embodiment, it is better to seal the assembling hole 100 by the current interrupt plate 201, so that the air pressure can be sufficiently applied on the current interrupt plate 201. In some embodiments, in order to guarantee more secure connection between the current interrupt plate 201 and the deformable plate 202, an opening is defined in the current interrupt plate 201, a part of the deformable plate 202 is embedded in the opening, and in this case, the current interrupt plate 201 and the deformable plate 202 cooperatively seal the assembling hole 102.

Further, both the connecting plate 203 and the insulating piece 200 may be sealedly connected with the top cover plate 10, so that the air pressure will be applied on the current interrupt plate 201 and the deformable plate 202.

The current interrupt plate 201 includes a weak area, e.g., a notch, the deformable plate 202 will pull the current interrupt plate when the deformable plate 202 deforms, and then the weak area will break as it cannot bear the pulling force. In order to provide enough space for deformation of the deformable plate 202, the connecting plate 203 in the present embodiment is formed with an accommodating chamber 204. The accommodating chamber 204 faces to the assembling hole 100, that is to say, the deformable plate 202 is attached to the connecting plate 203 and covers the accommodating chamber 204, and the deformable plate 202 is electrically connected with and fixed on the connecting plate 203 and is electrically connected with the current interrupt plate 201. In the present embodiment, the deformable plate 202 is configured to uncouple from the current interrupt plate 201 when the internal pressure of the power battery goes beyond a reference pressure, i.e., the deformable plate 202 can deform and enter into the accommodating chamber 204 to be electrically disconnected with the current interrupt plate 201, and the accommodating chamber 204 can provide enough space to accommodate the deformable plate 202 after deforming.

Under such configuration, the protection structure constituted by the current interrupt plate 201 and the deformable plate 202 is basically located outside the power battery and does not occupy the internal space of the power battery, so that the internal space of the power battery occupied by the protection structure is significantly reduced and the energy density of the battery is effectively improved.

As shown in FIGS. 2-4, in order to facilitate connection between the deformable plate 202 and the current interrupt plate 201, it is preferred that the deformable plate 202 in the present embodiment is in direct contact with a bottom edge of the accommodating chamber 204, so that the deformable plate 202 is closest to the current interrupt plate 201 and, at the same time, more space above the deformable plate 202 is provided for deformation of the deformable plate 202. Further, it is preferred that the current interrupt plate 201 is arranged on a top end of the assembling hole 100 to be as close to the deformable plate 202 as possible, so that more space can be provided in the power battery.

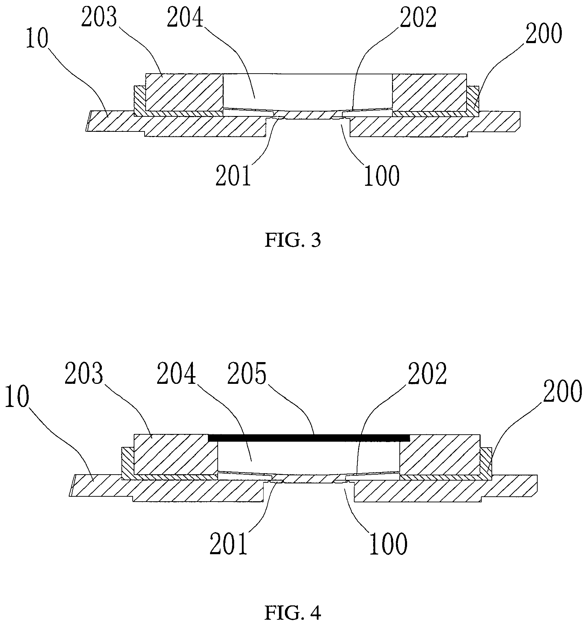

In the present embodiment, the accommodating chamber 204 can be structured in various forms, for example, as shown in FIG. 2, a portion of the accommodating chamber 204 away from the assembling hole 100 is configured into a closed structure, so that the deformable plate 202 and the connecting plate 203 cooperatively define a closed space, i.e., the deformable plate 202 seals the accommodating chamber 204. The closed space can be vacuumed, so as to reduce resistance when the deformable plate 202 deforms. As shown in FIG. 3, the portion of the accommodating chamber 204 away from the assembling hole 100 may is formed with an opening, so that the deformable plate 202 can directly communicate with the external environment. Since the opening exposes the deformable plate 202 in the external environment, articles from the external environment may directly contact the deformable plate 202. In order to avoid such situation, a protection member 205 may be provided to cover the opening (See FIG. 4). The protection member 205 may be a soft film, for example, PP film with good flexibility, or metal sheet.

In the present application, in order to facilitate manufacturing and assembling, the deformable plate 202 can be sealedly connected with the accommodating chamber 204 through various manners, two manners of which are illustrated in detail as follows.

As shown in FIG. 2, as a first manner, a groove 206 is formed at an edge of the accommodating chamber 204, and an edge of the deformable plate 202 is inserted into the groove 206. The deformable plate 202 may be configured into a structure including a connecting head 202a, a deformable portion 202b and an annular connecting portion 202c. The deformable portion 202b is shaped into a circular sheet, the connecting head 202a protrudes from a bottom surface of the deformable portion 202b, and the annular connecting portion 202c surrounds an outer edge of the deformable portion 202b. During assembling, the connecting head 202a is connected to the current interrupt plate 201, and the annular connecting portion 202c is inserted into the groove 206. Such manner can be adapted to various structural forms of the deformable plate accommodating chamber 204.

As shown in FIG. 3 and FIG.4, as a second manner, the deformable plate 202 and the connecting plate 203 are integrally molded by mold pressing, mechanical processing, etc. Due to limitation on processing process and structure, such manner is limited to a situation in which the portion of the accommodating chamber 204 away from the assembling hole 100 defines an opening.

The present application further provides a power battery, and the power battery adopts the power battery top cover of the present application, which can improve the energy density of the power battery.

The above are merely preferred embodiments of the present application, which are not used to limit the present application.

## Claims

1. A top cover for a power battery, **characterized in that**, comprising a top cover plate, a first electrode unit and a second electrode unit,
wherein the first electrode unit comprises a connecting plate, a deformable plate, an insulating piece and a current interrupt plate,
an assembling hole is formed in the top cover plate, the current interrupt plate is in direct contact with the top cover plate,
the connecting plate is insulated from the top cover plate through the insulating piece and is formed with an accommodating chamber, the accommodating chamber faces to the assembling hole,
the deformable plate is attached to the connecting plate and closes a bottom of the accommodating chamber, and the deformable plate is electrically connected with the current interrupt plate,
the second electrode unit is electrically insulated from the top cover plate, and the deformable plate is configured to uncouple from the current interrupt plate when an internal pressure of the power battery goes beyond a reference pressure.

2. The top cover for a power battery according to claim 1, **characterized in that**,
the current interrupt plate seals the assembling hole; or
the current interrupt plate and the deformable plate seal the assembling hole.

3. The top cover for a power battery according to claim 1, **characterized in that**, the deformable plate is in direct contact with a bottom edge of the accommodating chamber.

4. The top cover for a power battery according to claim 3, **characterized in that**, a portion of the accommodating chamber away from the assembling hole is closed, and the deformable plate seals the accommodating chamber.

5. The top cover for a power battery according to claim 1, **characterized in that**, a portion of the accommodating chamber away from the assembling hole is formed with an opening.

6. The top cover for a power battery according to claim 1, **characterized in that**, a groove is formed at a bottom edge of the accommodating chamber, and an edge of the deformable plate is inserted into the groove.

7. The top cover for a power battery according to claim 6, **characterized in that**, the deformable plate comprises a connecting head, a deformable portion and an annular connecting portion,
the deformable portion is shaped into a circular sheet, the connecting head protrudes from a bottom surface of the deformable portion, the annular connecting portion surrounds an outer edge of the deformable portion,
the connecting head is connected to the current interrupt plate, and the annular connecting portion is inserted into the groove.

8. The top cover for a power battery according to claim 1, **characterized in that**, the deformable plate and the connecting plate are integrated as a whole.

9. The top cover for a power battery according to claim 5, **characterized in that**, the opening is covered by a protection member.

10. The top cover for a power battery according to any one of claims 1-5, **characterized in that**, the current interrupt plate and the top cover plate are integrated as a whole.

11. The top cover for a power battery according to any one of claims 1-5, **characterized in that**, the insulating piece is riveted with the top cover plate.

12. A power battery, **characterized in that**, comprising the top cover for a power battery according to any one of claims 1-11.

## Patentansprüche

1. Abdeckung für eine Leistungsbatterie, **dadurch gekennzeichnet, dass** sie eine Abdeckungsplatte, eine erste Elektrodeneinheit und eine zweite Elektrodeneinheit aufweist,
wobei die erste Elektrodeneinheit eine Verbindungsplatte, eine verformbare Platte, ein Isolierteil und eine Stromunterbrechungsplatte aufweist,
ein Montageloch in der Abdeckungsplatte ausgebildet ist, die Stromunterbrechungsplatte in direktem Kontakt mit der Abdeckungsplatte steht,
die Verbindungsplatte durch das Isolierteil von der Abdeckungsplatte isoliert ist und mit einer Aufnahmekammer ausgebildet ist, die Aufnahmekammer dem Montageloch zugewandt ist,
die verformbare Platte an der Verbindungsplatte angebracht ist und eine Unterseite der Aufnahmekammer schließt, und die verformbare Platte mit der Stromunterbrechungsplatte elektrisch verbunden ist,
die zweite Elektrodeneinheit von der Abdeckungsplatte elektrisch isoliert ist, und die verformbare Platte konfiguriert ist, von der Stromunterbrechungsplatte entkoppelt zu werden, wenn ein Innendruck der Leistungsbatterie über einen Referenzdruck hinausgeht.

2. Abdeckung für eine Leistungsbatterie nach Anspruch 1, **dadurch gekennzeichnet, dass**
die Stromunterbrechungsplatte das Montageloch abdichtet; oder
die Stromunterbrechungsplatte und die verformbare Platte das Montageloch abdichten.

3. Abdeckung für eine Leistungsbatterie nach Anspruch 1, **dadurch gekennzeichnet, dass** die verformbare Platte mit einer Unterkante der Aufnahmekammer in direktem Kontakt steht.

4. Abdeckung für eine Leistungsbatterie nach Anspruch 3, **dadurch gekennzeichnet, dass** ein Abschnitt der Aufnahmekammer abseits des Montagelochs geschlossen ist und die verformbare Platte die Aufnahmekammer abdichtet.

5. Abdeckung für eine Leistungsbatterie nach Anspruch 1, **dadurch gekennzeichnet, dass** ein Abschnitt der Aufnahmekammer abseits des Montagelochs mit einer Öffnung ausgebildet ist.

6. Abdeckung für eine Leistungsbatterie nach Anspruch 1, **dadurch gekennzeichnet, dass** eine Nut auf einer Unterkante der Aufnahmekammer ausgebildet ist und eine Kante der verformbaren Platte in der Nut eingefügt ist.

7. Abdeckung für eine Leistungsbatterie nach Anspruch 6, **dadurch gekennzeichnet, dass** die verformbare Platte einen Verbindungskopf, einen verformbaren Abschnitt und einen ringförmigen Verbindungsabschnitt aufweist,
der verformbare Abschnitt in ein kreisförmiges Blech geformt ist, der Verbindungskopf von einer unteren Oberfläche des verformbaren Abschnitts vorsteht, der ringförmige Verbindungsabschnitt eine Außenkante des verformbaren Abschnitts umgibt,
der Verbindungskopf mit der Stromunterbrechungsplatte verbunden ist und der ringförmige Verbindungsabschnitt in der Nut eingefügt ist.

8. Abdeckung für eine Leistungsbatterie nach Anspruch 1, **dadurch gekennzeichnet, dass** die verformbare Platte und die Verbindungsplatte als ein Ganzes integriert sind.

9. Abdeckung für eine Leistungsbatterie nach Anspruch 5, **dadurch gekennzeichnet, dass** die Öffnung von einem Schutzelement abgedeckt ist.

10. Abdeckung für eine Leistungsbatterie nach einem der Ansprüche 1-5, **dadurch gekennzeichnet, dass** die Stromunterbrechungsplatte und die Abdeckungsplatte als ein Ganzes integriert sind.

11. Abdeckung für eine Leistungsbatterie nach einem der Ansprüche 1-5, **dadurch gekennzeichnet, dass** das Isolierteil mit der Abdeckungsplatte vernietet ist.

12. Leistungsbatterie, **dadurch gekennzeichnet, dass** sie die Abdeckung für eine Leistungsbatterie nach einem der Ansprüche 1-11 aufweist.

## Revendications

1. Couvercle supérieur pour une batterie d'alimentation, **caractérisé en ce qu'**il comprend une plaque de couvercle supérieur, une première unité d'électrode et une seconde unité d'électrode,
dans lequel la première unité d'électrode comprend une plaque de connexion, une plaque déformable, une pièce isolante, et une plaque d'interruption de courant ;
un trou d'assemblage est formé dans la plaque de couvercle supérieur, la plaque d'interruption de courant étant en contact direct avec la plaque de couvercle supérieur ;
la plaque de connexion est isolée de la plaque de couvercle supérieur par le biais de la pièce isolante et est formée avec une chambre de logement, la chambre de logement faisant face au trou d'assemblage ;
la plaque déformable est fixée à la plaque de connexion et ferme un fond de la chambre de logement, et la plaque déformable est connectée par voie électrique à la plaque d'interruption de courant ;
la seconde unité d'électrode est isolée sur le plan électrique de la plaque de couvercle supérieur, et la plaque déformable est configurée pour se désolidariser de la plaque d'interruption de courant lorsqu'une pression interne de la batterie d'alimentation excède une pression de référence.

2. Couvercle supérieur pour une batterie d'alimentation selon la revendication 1, **caractérisé en ce que**
la plaque d'interruption de courant scelle le trou d'assemblage, ou
la plaque d'interruption de courant et la plaque déformable scellent le trou d'assemblage.

3. Couvercle supérieur pour une batterie d'alimentation selon la revendication 1, **caractérisé en ce que** la plaque déformable est en contact direct avec un bord de fond de la chambre de logement.

4. Couvercle supérieur pour une batterie d'alimentation selon la revendication 3, **caractérisé en ce qu'**une portion de la chambre de logement à distance du trou d'assemblage est fermée, et la plaque déformable scelle la chambre de logement.

5. Couvercle supérieur pour une batterie d'alimentation selon la revendication 1, **caractérisé en ce qu'**une portion de la chambre de logement à distance du trou d'assemblage est formée avec une ouverture.

6. Couvercle supérieur pour une batterie d'alimentation selon la revendication 1, **caractérisé en ce qu'**une rainure est formée sur un bord de fond de la chambre de logement, et un bord de la plaque déformable est inséré dans la rainure.

7. Couvercle supérieur pour une batterie d'alimentation selon la revendication 6, **caractérisé en ce que** la plaque déformable comprend une tête de connexion, une portion déformable, et une portion de connexion annulaire ;
la portion déformable est façonnée en une feuille circulaire ; la tête de connexion fait saillie à partir d'une surface de fond de la portion déformable ; la portion de connexion annulaire entoure un bord extérieur de la portion déformable, et
la tête de connexion est connectée à la plaque d'interruption de courant, et la portion de connexion annulaire est insérée dans la rainure.

8. Couvercle supérieur pour une batterie d'alimentation selon la revendication 1, **caractérisé en ce que** la plaque déformable et la plaque de connexion sont intégrées d'un seul tenant.

9. Couvercle supérieur pour une batterie d'alimentation selon la revendication 5, **caractérisé en ce que** l'ouverture est recouverte d'un élément de protection.

10. Couvercle supérieur pour une batterie d'alimentation selon l'une quelconque des revendications 1 à 5, **caractérisé en ce que** la plaque d'interruption de courant et la plaque de couvercle supérieur sont intégrées d'un seul tenant.

11. Couvercle supérieur pour une batterie d'alimentation selon l'une quelconque des revendications 1 à 5, **caractérisé en ce que** la pièce isolante est rivetée à la plaque de couvercle supérieur.

12. Batterie d'alimentation, **caractérisée en ce qu'**elle comprend le couvercle supérieur pour une batterie d'alimentation selon l'une quelconque des revendications 1 à 11.
